# EUROPEAN PATENT APPLICATION

(11) **EP 3 813 150 A1**
(43) Date of publication of application: **28.04.2021**
(21) Application number: 19822328.1
(22) Date of filing: 06.06.2019
(51) Int. Cl.: H01M 2/16, H01M 4/13

(54) **METHOD FOR PRODUCING SLURRY FOR SECONDARY BATTERY FUNCTIONAL LAYERS**

(30) Priority: 20.06.2018 JP 2018116852
(71) Applicant: Zeon Corporation, Tokyo 100-8246 (JP)
(72) Inventor: TOYODA, Yujiro, Tokyo 100-8246 (JP)
(74) Representative: Maiwald Patent- und Rechtsanwaltsgesellschaft mbH
(86) International application number: PCT/JP2019/022447
(87) International publication number: WO 2019/244643

(57) **Abstract**

Provided is a method of efficiently producing a slurry for a secondary battery functional layer having non-conductive inorganic particles well dispersed in water. The method of producing a slurry includes a step of performing pulverizing and dispersing treatment of a composition containing non-conductive inorganic particles and water to obtain a dispersion liquid, and further includes either or both: a step of mixing the non-conductive inorganic particles and the water with a dispersant that includes a sulfo group and has a weight-average molecular weight of not less than 1,000 and not more than 15,000, before the step of performing pulverizing and dispersing treatment, to prepare the composition; and a step of adding a dispersant that includes a sulfo group and has a weight-average molecular weight of not less than 1,000 and not more than 15,000 to the dispersion liquid after the step of performing pulverizing and dispersing treatment.

## Description

### TECHNICAL FIELD

The present disclosure relates to a method of producing a slurry for a secondary battery functional layer.

### BACKGROUND

Secondary batteries such as lithium ion secondary batteries have characteristics such as compact size, light weight, high energy-density, and the ability to be repeatedly charged and discharged, and are used in a wide range of applications. A secondary battery generally includes battery members such as a positive electrode, a negative electrode, and a separator that isolates the positive electrode and the negative electrode from one another and prevents short circuiting between the positive and negative electrodes.

There are instances in which, in order to impart a function such as heat resistance, puncture resistance, or adhesiveness to a battery member of a secondary battery such as described above, the battery member is provided with a layer that can cause the expression of these expected functions (hereinafter, referred to as a "functional layer"). For example, the use of a functional layer containing non-conductive inorganic particles such as alumina particles is conventionally adopted in order to improve heat resistance, puncture resistance, and so forth of a battery member (for example, refer to Patent Literature (PTL) 1).

Alumina particles serving as non-conductive inorganic particles used in a functional layer are produced by, for example, baking a raw material to convert the raw material to alumina, subsequently performing milling in the presence of water to obtain a slurry, and then spray drying the slurry. The alumina particles obtained through spray drying are added into water once again and are dispersed to obtain a slurry for a secondary battery functional layer that is then applied onto a suitable substrate and dried to form a functional layer containing the alumina particles.

### CITATION LIST

### Patent Literature

PTL 1: JP2017-134915A

### SUMMARY

### (Technical Problem)

However, in the conventional method of producing a slurry for a secondary battery functional layer using non-conductive inorganic particles that is described above, there is demand for more efficiently producing a slurry for a secondary battery functional layer having non-conductive inorganic particles dispersed in water.

Accordingly, an object of the present disclosure is to provide a method of efficiently producing a slurry for a secondary battery functional layer having non-conductive inorganic particles well dispersed in water.

### (Solution to Problem)

The inventor conducted diligent investigation with the aim of solving the problem set forth above. The inventor focused on a point that in the conventional method described above, alumina particles that have been milled in water are subsequently spray dried and then redispersed in water. The inventor discovered that by performing treatment in which non-conductive inorganic particles such as alumina particles are pulverized in water while simultaneously being dispersed (pulverizing and dispersing treatment) and by adding a specific dispersant before, after, or both before and after the pulverizing and dispersing treatment, it is possible to efficiently produce a slurry for a secondary battery functional layer having non-conductive inorganic particles well dispersed in water. In this manner, the inventor completed the present disclosure.

Specifically, the present disclosure aims to advantageously solve the problem set forth above, and a presently disclosed method of producing a slurry for a secondary battery functional layer comprises a step of performing pulverizing and dispersing treatment of a composition containing non-conductive inorganic particles and water to obtain a dispersion liquid, and further comprises either or both:
a step of mixing the non-conductive inorganic particles and the water with a dispersant that includes a sulfo group and has a weight-average molecular weight of not less than 1,000 and not more than 15,000, before the step of performing pulverizing and dispersing treatment, to prepare the composition; and
a step of adding a dispersant that includes a sulfo group and has a weight-average molecular weight of not less than 1,000 and not more than 15,000 to the dispersion liquid after the step of performing pulverizing and dispersing treatment.

By performing pulverizing and dispersing treatment of non-conductive inorganic particles in water and by also adding the dispersant set forth above at a timing before, after, or both before and after the pulverizing and dispersing treatment in this manner, it is possible to efficiently produce a slurry for a functional layer having non-conductive inorganic particles well dispersed in water.

Note that the "weight-average molecular weight" referred to in the present disclosure can be measured by a method described in the EXAMPLES section of the present specification.

In the presently disclosed method of producing a slurry for a secondary battery functional layer, it is preferable that the non-conductive inorganic particles have a volume-average particle diameter of not less than 10 µm and not more than 120 µm in the composition before the pulverizing and dispersing treatment, and the non-conductive inorganic particles have a volume-average particle diameter of not less than 0.3 µm and not more than 1.5 µm in the dispersion liquid after the pulverizing and dispersing treatment. When the volume-average particle diameter of the non-conductive inorganic particles before and after the pulverizing and dispersing treatment is within the ranges set forth above, sufficient production efficiency of a slurry for a functional layer can be ensured while also enabling improvement of battery characteristics of a secondary battery that includes a functional layer formed using the slurry for a functional layer.

Note that the "volume-average particle diameter" referred to in the present disclosure can be measured by a method described in the EXAMPLES section of the present specification.

The presently disclosed method of producing a slurry for a secondary battery functional layer preferably comprises both:
a step of mixing the non-conductive inorganic particles and the water with a dispersant that includes a sulfo group and has a weight-average molecular weight of not less than 1,000 and not more than 15,000, before the step of performing pulverizing and dispersing treatment, to prepare the composition; and
a step of adding a dispersant that includes a sulfo group and has a weight-average molecular weight of not less than 1,000 and not more than 15,000 to the dispersion liquid after the step of performing pulverizing and dispersing treatment.

By performing pulverizing and dispersing treatment of non-conductive inorganic particles in water and by also adding the dispersant set forth above at a timing both before and after the pulverizing and dispersing treatment in this manner, it is possible to efficiently produce a slurry for a functional layer having non-conductive inorganic particles sufficiently well dispersed in water. Addition of the dispersant after the pulverizing and dispersing treatment is advantageous in terms that supplemental addition of the dispersant can be performed as necessary after checking the dispersion state of the non-conductive inorganic particles in the dispersion liquid that is obtained after the dispersing treatment.

In the presently disclosed method of producing a slurry for a secondary battery functional layer, the pulverizing and dispersing treatment is preferably performed using a high-pressure spraying disperser. By performing the pulverizing and dispersing treatment using a high-pressure spraying disperser, it is possible to produce a slurry for a functional layer having non-conductive inorganic particles even better dispersed in water.

Note that in the presently disclosed method of producing a slurry for a secondary battery functional layer, the non-conductive inorganic particles preferably include at least one selected from the group consisting of alumina particles, boehmite particles, and titanium oxide particles.

In the presently disclosed method of producing a slurry for a secondary battery functional layer, the slurry for a secondary battery functional layer preferably has a viscosity of not less than 1 mPa·s and not more than 30 mPa·s. When the viscosity of the obtained slurry for a functional layer is within the range set forth above, a functional layer having excellent smoothness can be formed using the slurry for a functional layer.

Note that the "viscosity" referred to in the present disclosure can be measured by a method described in the EXAMPLES section of the present specification.

### (Advantageous Effect)

Through the presently disclosed method of producing a slurry for a secondary battery functional layer, it is possible to efficiently produce a slurry for a secondary battery functional layer having non-conductive inorganic particles well dispersed in water.

### DETAILED DESCRIPTION

The following provides a detailed description of embodiments of the present disclosure.

The presently disclosed method of producing a slurry for a secondary battery functional layer can be used in production of a slurry for a secondary battery functional layer that is used to form a functional layer that is a constituent of a battery member, such as an electrode or a separator, of a secondary battery.

Through the presently disclosed production method, it is possible to efficiently produce a slurry for a secondary battery functional layer having non-conductive inorganic particles well dispersed in water.

### (Materials of slurry for secondary battery functional layer)

In the presently disclosed production method, non-conductive inorganic particles, a dispersant that includes a sulfo group and has a weight-average molecular weight of not less than 1,000 and not more than 15,000, and water are used as materials of a slurry for a functional layer. Moreover, materials other than the non-conductive inorganic particles, specific dispersant, and water mentioned above (i.e., other materials) may be used as materials of the slurry for a functional layer. Furthermore, the slurry for a functional layer produced by the presently disclosed production method contains non-conductive inorganic particles, the specific dispersant, and water, and may optionally contain other materials (components).

### <Non-conductive inorganic particles>

The non-conductive inorganic particles are not specifically limited so long as they are particles formed of an inorganic material that is present stably in an environment of use of a secondary battery and that is electrochemically stable. Examples of non-conductive inorganic particles that can be used include alumina particles, boehmite particles, titanium oxide particles, magnesium oxide particles, and magnesium hydroxide particles. One of these types of non-conductive inorganic particles may be used individually, or two or more of these types of non-conductive inorganic particles may be used in combination in a freely selected ratio. Of these non-conductive inorganic particles, alumina particles, boehmite particles, and titanium oxide particles are preferable.

### <Dispersant>

A polymer that includes a sulfo group and has a weight-average molecular weight of not less than 1,000 and not more than 15,000 is used as the dispersant.

As a result of the dispersant that is a polymer including a sulfo group, the dispersant is well adsorbed by the non-conductive inorganic particles, which enables good dispersion of the non-conductive inorganic particles in water. No specific limitations are placed on the method by which a sulfo group is introduced into the dispersant that is a polymer, and although a polymer that includes a sulfo group may be produced through polymerization of a monomer composition containing a sulfo group-containing monomer or a sulfo group may be introduced into a polymer that does not include a sulfo group through a commonly known modification reaction, the former of these methods is preferable. In other words, the dispersant is preferably a polymer that includes a sulfo group-containing monomer unit.

The phrase "includes a monomer unit" as used in the present disclosure means that "a polymer obtained with the monomer includes a repeating unit derived from the monomer".

### «Sulfo group-containing monomer unit»

In the case of a polymer including a sulfo group-containing monomer unit that is one example of the dispersant, examples of sulfo group-containing monomers that can form the sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, 3-allyloxy-2-hydroxy-1-propane sulfonic acid, and 2-(N-acryloyl)amino-2-methyl-1,3-propane-disulfonic acid. One of these sulfo group-containing monomers may be used individually, or two or more of these sulfo group-containing monomers may be used in combination in a freely selected ratio. Moreover, the sulfo group-containing monomer may be used in the form of a salt such as a sodium salt. Of these sulfo group-containing monomers, 3-allyloxy-2-hydroxy-1-propane sulfonic acid and 2-(N-acryloyl)amino-2-methyl-1,3-propane-disulfonic acid are preferable.

Note that in the present disclosure, "(meth)allyl" is used to indicate "allyl" and/or "methallyl", whereas "(meth)acryl" is used to indicate "acryl" and/or "methacryl".

### «Other monomer units»

The polymer including a sulfo group-containing monomer unit that is one example of the dispersant can include monomer units other than the sulfo group-containing monomer unit (i.e., other monomer units).

No specific limitations are placed on other monomer units so long as they are monomer units formed from monomers that are copolymerizable with a sulfo group-containing monomer such as described above, and examples thereof include a carboxy group-containing monomer unit and a phosphate group-containing monomer unit.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

One of these carboxy group-containing monomers may be used individually, or two or more of these carboxy group-containing monomers may be used in combination in a freely selected ratio. Moreover, the carboxy group-containing monomer may be used in the form of a salt such as a sodium salt.

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

One of these phosphate group-containing monomers may be used individually, or two or more of these phosphate group-containing monomers may be used in combination in a freely selected ratio. Moreover, the phosphate group-containing monomer may be used in the form of a salt such as a sodium salt.

Note that in the present disclosure, "(meth)acryloyl" is used to indicate "acryloyl" and/or "methacryloyl".

From a viewpoint of better dispersing the non-conductive inorganic particles in water, it is preferable that the polymer includes a carboxy group in addition to a sulfo group. For example, the polymer preferably includes a carboxy group-containing monomer unit in addition to a sulfo group-containing monomer unit.

In a case in which the polymer includes both a sulfo group-containing monomer unit and a carboxy group-containing monomer unit, a ratio of the proportional content of the sulfo group-containing monomer unit relative to the proportional content of the carboxy group-containing monomer unit (sulfo group/carboxy group monomer ratio), by mass, is preferably 1/999 or more, and more preferably 0.01 or more, and is preferably 2 or less, more preferably 1.5 or less, and even more preferably 1 or less. An excessive rise of viscosity of the slurry for a functional layer due to use of the dispersant can be inhibited when the sulfo group/carboxy group monomer ratio is 1/999 or more, and the non-conductive inorganic particles can be better dispersed in water due to better adsorption of the dispersant by the non-conductive inorganic particles when this ratio is 1 or less.

Moreover, in a case in which a polymer including both a sulfo group-containing monomer unit and a carboxy group-containing monomer unit is used as the dispersant, the total of the proportional content of the sulfo group-containing monomer unit and the proportional content of the carboxy group-containing monomer unit in the polymer when all monomer units in the polymer are taken to be 100 mass% is preferably 80 mass% or more, more preferably 90 mass% or more, even more preferably 95 mass% or more, and particularly preferably 100 mass%.

Note that the polymer including a sulfo group-containing monomer unit can be polymerized by a known method.

### «Weight-average molecular weight»

The weight-average molecular weight of the dispersant that is a polymer is required to be not less than 1,000 and not more than 15,000, is preferably 3,000 or more, more preferably 4,000 or more, and even more preferably 6,000 or more, and is preferably 12,000 or less. When the weight-average molecular weight of the dispersant is less than 1,000, an effect of steric hinderance of dispersant that has been adsorbed by the non-conductive inorganic particles is reduced, which makes it easier for aggregation of the non-conductive inorganic particles to occur. Consequently, it is not possible to obtain a slurry for a functional layer having non-conductive inorganic particles well dispersed in water. On the other hand, when the weight-average molecular weight of the dispersant is more than 15,000, the dispersant cannot be well adsorbed by the non-conductive inorganic particles, and thus it is not possible to obtain a slurry for a functional layer having non-conductive inorganic particles well dispersed in water. Moreover, heat shrinkage resistance of a functional layer that is formed using the obtained slurry for a functional layer is reduced.

### «Water-solubility»

The dispersant that is a polymer is preferably water-soluble (i.e., is preferably a water-soluble polymer). By using a water-soluble polymer as the dispersant, the non-conductive inorganic particles can be even better dispersed in water.

Note that when a polymer is referred to as "water-soluble" in the present disclosure, this means that when 0.5 g of the polymer is dissolved in 100 g of water at 25°C, insoluble content is less than 0.5 mass%.

### «Additive amount»

The additive amount of the dispersant per 100 parts by mass of the non-conductive inorganic particles is preferably 0.05 parts by mass or more, more preferably 0.1 parts by mass or more, and even more preferably 0.5 parts by mass or more, and is preferably 5 parts by mass or less, more preferably 3 parts by mass or less, and even more preferably 1 part by mass or less. When the additive amount of the dispersant is 0.05 parts by mass or more per 100 parts by mass of the non-conductive inorganic particles, an effect of steric hinderance of dispersant that has been adsorbed by the non-conductive inorganic particles increases, which makes it even more difficult for aggregation of the non-conductive inorganic particles to occur. Consequently, it is possible to obtain a slurry for a functional layer having non-conductive inorganic particles even better dispersed in water. Moreover, even in a situation in which the obtained slurry for a functional layer is stored for a long time and formation of aggregates occurs, the slurry for a functional layer can be restored to a good dispersion state by performing redispersing treatment (i.e., the slurry for a functional layer has excellent redispersibility). On the other hand, when the additive amount of the dispersant is 5 parts by mass or less per 100 parts by mass of the non-conductive inorganic particles, the amount of water that is imported into a functional layer formed using the obtained slurry for a functional layer does not excessively increase, and adequate battery characteristics of a secondary battery including the functional layer can be ensured.

Note that the "additive amount of the dispersant" referred to in the present disclosure is the total amount of the dispersant that is added as a material of the slurry for a functional layer in production of the slurry for a functional layer and thus, for example, is the total of the amount of the dispersant that is added during production of the composition containing the non-conductive inorganic particles and water and the amount of the dispersant that is added to the dispersion liquid obtained after performing pulverizing and dispersing treatment of the composition. In other words, the "additive amount of the dispersant" corresponds to the additive amount in the subsequently described pre-addition step in a case in which all of the dispersant is added only in the pre-addition step as an addition step of the dispersant, corresponds to the additive amount in a subsequently described post-addition step in a case in which all of the dispersant is only added in the post-addition step as an addition step of the dispersant, and corresponds to the total of the additive amount in the pre-addition step and the additive amount in the post-addition step in a case in which all of the dispersant is added only in the pre-addition step and the post-addition step as addition steps of the dispersant.

### <Other materials>

No specific limitations are placed on materials other than the above-described non-conductive inorganic particles, specific dispersant, and water that can optionally be used as materials of the slurry for a functional layer, and examples thereof include known components that can be contained in secondary battery functional layers. Examples of such components include binders, thickeners, and wetting agents.

### «Binder»

A known particulate polymer (particulate binder) such as a thermoplastic elastomer may be used as a binder without any specific limitations. The thermoplastic elastomer is preferably a conjugated diene polymer or an acrylic polymer from a viewpoint of binding capacity, and is more preferably an acrylic polymer.

Note that a "particulate polymer" referred to in the present disclosure is normally formed of a water-insoluble polymer. When a polymer is referred to as "water-insoluble", this means that when 0.5 g of the polymer is dissolved in 100 g of water at 25°C, insoluble content is 90 mass% or more.

The term "conjugated diene polymer" refers to a polymer that includes a conjugated diene monomer unit. Specific examples of the conjugated diene polymer include, but are not specifically limited to, a copolymer including an aromatic vinyl monomer unit and an aliphatic conjugated diene monomer unit such as a styrene-butadiene copolymer (SBR); butadiene rubber (BR); acrylic rubber (NBR) (copolymer including an acrylonitrile unit and a butadiene unit); and hydrogenated products thereof.

The term "acrylic polymer" refers to a polymer that includes a (meth)acrylic acid ester monomer unit. Examples of (meth)acrylic acid ester monomers that can be used to form the (meth)acrylic acid ester monomer unit include alkyl esters of (meth)acrylic acid such as methyl acrylate, ethyl acrylate, butyl acrylate, methyl methacrylate, ethyl methacrylate, and 2-ethylhexyl acrylate. Note that in the present disclosure, "(meth)acryl" is used to indicate "acryl" and/or "methacryl".

One of such binders may be used individually, or two or more of such binders may be used in combination.

The acrylic polymer that can be preferably used as the binder preferably further includes a (meth)acrylonitrile monomer unit. Through the inclusion of a (meth)acrylonitrile monomer unit, the strength of a functional layer formed using the obtained slurry for a functional layer can be increased. Note that in the present disclosure, "(meth)acrylonitrile" is used to indicate "acrylonitrile" and/or "methacrylonitrile".

The additive amount of the binder per 100 parts by mass of the non-conductive inorganic particles is preferably 1 part by mass or more, more preferably 2 parts by mass or more, and even more preferably 3 parts by mass or more, and is preferably 20 parts by mass or less, more preferably 15 parts by mass or less, and even more preferably 10 parts by mass or less. When the additive amount of the binder is 1 part by mass or more per 100 parts by mass of the non-conductive inorganic particles, detachment of the non-conductive inorganic particles from a functional layer formed using the obtained slurry for a functional layer can be sufficiently prevented, and peel strength of a battery member including the functional layer can be increased. On the other hand, when the additive amount of the binder is 20 parts by mass or less per 100 parts by mass of the non-conductive inorganic particles, an excessive rise of internal resistance of a secondary battery can be prevented, and adequate battery characteristics can be ensured.

The polymer set forth above that can be used as the binder can be produced by solution polymerization, suspension polymerization, emulsion polymerization, or the like, for example. Of these methods, emulsion polymerization and suspension polymerization are preferable in terms that polymerization can be carried out in water and a resultant water dispersion containing the binder can be suitably used, as obtained, as a material of the slurry for a functional layer.

### «Thickener»

Any known thickener can be used without any specific limitations but a water-soluble polymer (excluding those corresponding to the dispersant set forth above) such as carboxymethyl cellulose, a salt thereof, or polyacrylamide is preferable, for example, from a viewpoint of increasing heat shrinkage resistance of a functional layer formed using the obtained slurry for a functional layer.

The additive amount of the thickener per 100 parts by mass of the non-conductive inorganic particles is preferably 0.1 parts by mass or more, more preferably 0.3 parts by mass or more, and even more preferably 1 part by mass or more, and is preferably 10 parts by mass or less, more preferably 3 parts by mass or less, and even more preferably 2 parts by mass or less. Heat shrinkage resistance of a functional layer formed using the obtained slurry for a functional layer can be increased when the additive amount of the thickener is 0.1 parts by mass or more per 100 parts by mass of the non-conductive inorganic particles, whereas a functional layer having excellent smoothness can be formed using the obtained slurry for a functional layer when the additive amount of the thickener is 10 parts by mass or less per 100 parts by mass of the non-conductive inorganic particles.

### «Wetting agent»

Any known wetting agent can be used without any specific limitations but non-ionic surfactants and anionic surfactants are preferable from a viewpoint of forming a functional layer having excellent smoothness using the obtained slurry for a functional layer. In particular, a non-ionic surfactant such as an ethylene oxide-propylene oxide copolymer is preferable.

The additive amount of the wetting agent per 100 parts by mass of the non-conductive inorganic particles is preferably 0.05 parts by mass or more, more preferably 0.1 parts by mass or more, and even more preferably 0.15 parts by mass or more, and is preferably 2 parts by mass or less, more preferably 1.5 parts by mass or less, and even more preferably 1 part by mass or less. Wettability of the obtained slurry for a functional layer with a substrate can be ensured and cissing can be inhibited when the additive amount of the wetting agent is 0.05 parts by mass or more per 100 parts by mass of the non-conductive inorganic particles, whereas an excessive rise of the internal resistance of a secondary battery can be prevented and adequate battery characteristics can be ensured when the additive amount of the wetting agent is 2 parts by mass or less per 100 parts by mass of the non-conductive inorganic particles.

### (Production procedure of slurry for secondary battery functional layer)

In the presently disclosed production method, a slurry for a secondary battery functional layer is produced by a specific procedure using the materials set forth above.

Specifically, the presently disclosed production method is required to include a step (pulverizing and dispersing step) of performing pulverizing and dispersing treatment of a composition containing non-conductive inorganic particles and water to obtain a dispersion liquid and is also required to include either or both:
a step (pre-addition step) of mixing the non-conductive inorganic particles, a dispersant that includes a sulfo group and has a weight-average molecular weight of not less than 1,000 and not more than 15,000, and water, before the pulverizing and dispersing step, to prepare the composition; and
a step (post-addition step) of adding a dispersant that includes a sulfo group and has a weight-average molecular weight of not less than 1,000 and not more than 15,000 to the obtained dispersion liquid after the pulverizing and dispersing step.

The presently disclosed production method may include steps other than the pulverizing and dispersing step, pre-addition step, and post-addition step set forth above (i.e., other steps).

### <Pre-addition step>

In the pre-addition step, a specific dispersant is added in advance of the pulverizing and dispersing treatment step to prepare a composition that contains the specific dispersant in addition to non-conductive inorganic particles and water and that is a subject of pulverizing and dispersing treatment in the subsequent pulverizing and dispersing treatment step.

No specific limitations are placed on the method by which the non-conductive inorganic particles, the specific dispersant, and water are mixed to prepare the composition, and these materials may be mixed all at once, or, in a case in which an aqueous solution containing the specific dispersant is used, the aqueous solution may be further diluted with water and then the non-conductive inorganic particles may be added to the diluted solution.

### <Pulverizing and dispersing step>

In the pulverizing and dispersing step, the non-conductive inorganic particles contained in the composition are pulverized to form fine particles while also being dispersed (i.e., pulverizing and dispersing treatment of the composition is performed) to obtain a dispersion liquid. Note that in the presently disclosed production method, a dispersant may also be added to the composition during the pulverizing and dispersing treatment.

### «Device used in dispersing treatment»

The device used for the pulverizing and dispersing treatment in the pulverizing and dispersing step is not specifically limited so long as it is a device that can pulverize the non-conductive inorganic particles while dispersing the non-conductive inorganic particles in water and can be a known disperser such as a media-containing disperser or a medialess disperser.

Examples of media-containing dispersers include a bead mill and a ball mill.

Examples of medialess dispersers include a homogenizer and a high-pressure spraying disperser (device that performs pulverizing and dispersing by causing a pressurized treatment subject to collide with an impact plate or causing pressurized treatment subjects to collide with one another) such as a jet mill.

Specific examples of high-pressure spraying dispersers include a Star Burst® (Star Burst is a registered trademark in Japan, other countries, or both; produced by Sugino Machine Limited), an ultra-high-pressure wet atomizing device (produced by Yoshida Kikai Co., Ltd.), a Nano Jet Pul® (Nano Jet Pul is a registered trademark in Japan, other countries, or both; produced by Jokoh Co., Ltd.), a G-smasher (produced by RIX Corporation), and a NANOMIZER® (NANOMIZER is a registered trademark in Japan, other countries, or both; produced by Nanomizer Inc.).

Of these dispersers, the use of a medialess disperser is preferable from a viewpoint of preventing mixing of contaminants into the dispersion liquid due to abrasion or damage of dispersing media (beads, balls, etc.).

Of medialess dispersers, a high-pressure spraying disperser is more preferable from a viewpoint of obtaining a slurry for a functional layer in which the non-conductive inorganic particles are even better dispersed, and a high-pressure spraying disperser that performs pulverizing and dispersing by causing pressurized treatment subjects to collide with one another is particularly preferable from a viewpoint of preventing mixing of contaminants into the dispersion liquid due to abrasion or damage of an impact plate.

In the pulverizing and dispersing treatment performed using the high-pressure spraying disperser, the pressure applied to the composition that contains the non-conductive inorganic particles, water, and optionally the specific dispersant and that is a treatment subject is preferably 70 MPa or more, and more preferably 150 MPa or more, and is preferably 700 MPa or less, more preferably 500 MPa or less, and even more preferably 245 MPa or less. When the pressure applied to the composition is 70 MPa or more, pulverization of the non-conductive inorganic particles can be caused to sufficiently progress. Consequently, the amount of coarse components in the obtained slurry for a functional layer can be reduced, and, in a situation in which a functional layer is formed using the slurry for a functional layer, rupturing of the functional layer can be inhibited and short-circuiting of electrodes can be sufficiently prevented. On the other hand, when the pressure applied to the composition is 700 MPa or less, the non-conductive inorganic particles are pulverized to an appropriate degree without excessively increasing the specific surface area of the non-conductive inorganic particles. Consequently, deterioration of the dispersion state of the non-conductive inorganic particles in the obtained slurry for a functional layer due to an insufficient amount of the dispersant can be inhibited, and thickening and aggregation of the slurry for a functional layer can be prevented.

### «Properties of non-conductive inorganic particles before and after pulverizing and dispersing treatment»

The volume-average particle diameter of the non-conductive inorganic particles before the pulverizing and dispersing treatment (i.e., the non-conductive inorganic particles in the composition) is preferably 120 µm or less, more preferably 90 µm or less, even more preferably 60 µm or less, and particularly preferably 50 µm or less. By using non-conductive inorganic particles having a volume-average particle diameter of 120 µm or less as a material for preparing the slurry for a functional layer, sufficient production efficiency of the slurry for a functional layer can be ensured without an excessively long time being necessary for the pulverizing and dispersing treatment. On the other hand, the lower limit for the volume-average particle diameter of the non-conductive inorganic particles before the pulverizing and dispersing treatment is preferably 10 µm or more, and more preferably 35 µm or more from a viewpoint of ensuring sufficient handleability as a powder and enabling good implementation of the pulverizing and dispersing step.

The specific surface area of the non-conductive inorganic particles before the pulverizing and dispersing treatment is preferably 4 m²/g or less, and more preferably 3.5 m²/g or less. By using non-conductive inorganic particles having a specific surface area of 4 m²/g or less as a material for preparing the slurry for a functional layer, deterioration of the dispersion state of the non-conductive inorganic particles in the obtained slurry for a functional layer due to an insufficient amount of the dispersant can be inhibited, and thickening and aggregation of the slurry for a functional layer can be prevented. On the other hand, the lower limit for the specific surface area of the non-conductive inorganic particles before the pulverizing and dispersing treatment is not specifically limited but may be 1 m²/g or more, for example, or may be 1.5 m²/g or more, for example.

Note that the "specific surface area" referred to in the present disclosure is the nitrogen adsorption specific surface area measured by the BET method.

The volume-average particle diameter of the non-conductive inorganic particles after the pulverizing and dispersing treatment (i.e., the non-conductive inorganic particles in the dispersion liquid) is preferably 0.3 µm or more, more preferably 0.4 µm or more, even more preferably 0.5 µm or more, and particularly preferably 0.6 µm or more, and is preferably 1.5 µm or less, more preferably 1.4 µm or less, and even more preferably 1.3 µm or less. When the volume-average particle diameter of the non-conductive inorganic particles after the pulverizing and dispersing treatment is 0.3 µm or more, the density of a functional layer formed using the obtained slurry for a functional layer does not excessively increase. Consequently, ion permeability of a battery member (particularly a separator) including the functional layer can be ensured in a secondary battery in which the battery member including the functional layer is used, and battery characteristics can be improved. On the other hand, when the volume-average particle diameter of the non-conductive inorganic particles after the pulverizing and dispersing treatment is 1.5 µm or less, the non-conductive inorganic particles can be uniformly dispersed in a functional layer formed using the obtained slurry for a functional layer. Consequently, battery characteristics of a secondary battery in which a battery member including the functional layer is used can be improved.

### <Post-addition step>

In the post-addition step, a specific dispersant is added to the dispersion liquid that is obtained in the pulverizing and dispersing treatment step set forth above. The dispersion liquid to which the dispersant has been added is preferably mixed by a known method.

As previously described, the presently disclosed production method includes either or both the pre-addition step and the post-addition step, but the post-addition step is advantageous in terms that the dispersant can be supplementally added as necessary after checking the dispersion state of the non-conductive inorganic particles in the dispersion liquid obtained after the dispersing treatment. Moreover, when the presently disclosed production method includes both the pre-addition step and the post-addition step, a slurry for a functional layer having non-conductive inorganic particles sufficiently well dispersed in water can be efficiently produced.

In a case in which addition of the dispersant is split between the pre-addition step and the post-addition step, the additive amount of the dispersant per 100 parts by mass of the non-conductive inorganic particles in the pre-addition step is preferably 0.05 parts by mass or more, more preferably 0.1 parts by mass or more, even more preferably 0.15 parts by mass or more, and particularly preferably 0.3 parts by mass or more, and is preferably 5 parts by mass or less, more preferably 3 parts by mass or less, and even more preferably 2 parts by mass or less. Moreover, in a case in which addition of the dispersant is split between the pre-addition step and the post-addition step, the additive amount of the dispersant per 100 parts by mass of the non-conductive inorganic particles in the post-addition step is preferably 0.05 parts by mass or more, more preferably 0.1 parts by mass or more, even more preferably 0.15 parts by mass or more, and particularly preferably 0.2 parts by mass or more, and is preferably 5 parts by mass or less, more preferably 3 parts by mass or less, and even more preferably 2 parts by mass or less.

Furthermore, in a case in which addition of the dispersant is split between the pre-addition step and the post-addition step, the additive amount of the dispersant in the pre-addition step when the total additive amount of the dispersant (for example, the total of the additive amount of the dispersant in the pre-addition step and the additive amount of the dispersant in the post-addition step) is taken to be 100 mass% is preferably 10 mass% or more, and more preferably 20 mass% or more, and is preferably 70 mass% or less, more preferably 60 mass% or less, and even more preferably 50 mass% or less.

### <Other steps>

Examples of other steps include, but are not specifically limited to, a step (preparation step) of adding other materials such as previously described to the dispersion liquid produced through the pulverizing and dispersing step and the pre-addition step and/or post-addition step set forth above, a step (coarse component removal step) of removing coarse components, and a step (magnetic substance removal step) of removing magnetic substances.

Note that although other materials such as previously described (binders, thickeners, wetting agents, etc.) can be added with the dispersant in the pre-addition step and/or the post-addition step, for example, it is preferable that other materials are only added in the preparation step (i.e., addition of other materials is performed after addition of the dispersant and is not performed in the pulverizing and dispersing step, the pre-addition step, and the post-addition step) from a viewpoint of causing good adsorption of the dispersant by the non-conductive inorganic particles and causing better dispersion of the non-conductive inorganic particles in the obtained slurry for a functional layer.

The coarse component removal step and the magnetic substance removal step can each be implemented by a known method.

### (Slurry for secondary battery functional layer)

The viscosity of the slurry for a functional layer that is obtained as set forth above is preferably 1 mPa·s or more, more preferably 5 mPa·s or more, and even more preferably 10 mPa·s or more, and is preferably 30 mPa·s or less. Solid-liquid separation during application of the slurry for a functional layer can be inhibited and non-uniformity of thickness of a coating layer can be suppressed when the viscosity of the slurry for a functional layer is 1 mPa·s or more, whereas leveling properties of the slurry for a functional layer can be ensured when the viscosity of the slurry for a functional layer is 30 mPa·s or less. Accordingly, a functional layer having excellent smoothness can be formed by using a slurry for a functional layer that has a viscosity within any of the ranges set forth above.

The solid content concentration of the slurry for a functional layer is preferably 20 mass% or more, more preferably 25 mass% or more, and even more preferably 30 mass% or more, and is preferably 60 mass% or less, more preferably 55 mass% or less, and even more preferably 50 mass% or less. When the solid content concentration of the slurry for a functional layer is 20 mass% or more, preservation stability of the slurry can be ensured. On the other hand, when the solid content concentration of the slurry for a functional layer is 60 mass% or less, leveling properties of the slurry can be ensured, and a functional layer having excellent smoothness can be formed.

A functional layer can be formed by applying the obtained slurry for a secondary battery functional layer onto a suitable substrate (for example, an electrode substrate, a separator substrate, or a releasable substrate) and drying the slurry for a secondary battery functional layer. The substrate can be a known substrate such as a substrate described in JP2017-134915A, for example.

A secondary battery member that includes the obtained functional layer can be used to assemble a secondary battery by a known method.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative example, the following methods were used to measure and evaluate the volume-average particle diameter and specific surface area of non-conductive inorganic particles; the weight-average molecular weight of a dispersant; the viscosity, amount of mesh residue upon passing through a 635 mesh (dispersibility of non-conductive inorganic particles), and zirconium content of a slurry for a secondary battery functional layer; and the heat shrinkage resistance, peel strength, and rate of Gurley value increase due to functional layer formation of a separator.

### <Volume-average particle diameter>

A composition (before pulverizing and dispersing treatment) or a dispersion liquid (after pulverizing and dispersing treatment) was dripped into a flow cell into which deionized water had been supplied such that the scattering intensity was approximately 50%, ultrasonic dispersing was performed, and then a particle diameter distribution (volume basis) was measured using a laser diffraction particle diameter distribution analyzer (SALD-7100 produced by Shimadzu Corporation). In the measured particle diameter distribution, the particle diameter at which the cumulative volume calculated from a small-diameter end of the distribution reached 50% was taken to be the volume average particle diameter (D50) of non-conductive inorganic particles.

### <Specific surface area>

The BET specific surface area of non-conductive inorganic particles was measured using a wet specific surface area measurement apparatus (FlowSorb III 2305 produced by Shimadzu Corporation).

### <Weight-average molecular weight>

The weight-average molecular weight of a dispersant was measured under the following measurement conditions by gel permeation chromatography (GPC) using a LiBr-NMP solution of 10 mM in concentration.
- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK Standard Polystyrene (produced by Tosoh Corporation)

### <Viscosity>

The viscosity of a slurry for a functional layer was measured in accordance with JIS K7117-1 under conditions of a temperature of 25°C and a rotation speed of 60 rpm using a B-type viscometer.

### <Amount of mesh residue>

A 635-mesh SUS wire screen was used to filter 1 kg of a slurry for a functional layer. Next, material collected on the wire screen was washed with deionized water and was subsequently dried at 105°C for 1 hour. The wire screen having the dried collected material attached thereto was weighed and the amount of mesh residue was calculated by the following formula.

Amount of mesh residue (mass ppm) = (a - b)/(c × d/100) × 1,000,000
a: Mass (g) of wire screen having dried collected material attached thereto
b: Mass (g) of wire screen
c: Mass (g) of slurry for functional layer
d: Solid content concentration (mass%) of slurry for functional layer

The determined amount of mesh residue was used in evaluation by the following standard. A smaller amount of mesh residue indicates fewer aggregates and better dispersion of non-conductive inorganic particles in the obtained slurry for a functional layer.
A: Amount of mesh residue of less than 50 mass ppm
B: Amount of mesh residue of not less than 50 mass ppm and less than 150 mass ppm
C: Amount of mesh residue of not less than 150 mass ppm and less than 450 mass ppm
D: Amount of mesh residue of 450 mass ppm or more

### <Zirconium content>

A small amount of a slurry for a functional layer was weighed into a small vessel having a PTTE interior and was dried until hardened on a hot plate at approximately 150°C. Next, 5 mL of distilled water, 2.5 mL of nitric acid, and 2.5 mL of sulfuric acid were added into the vessel, the contents of the vessel (dried product, distilled water, nitric acid, and sulfuric acid) were transferred to a pressurized decomposition vessel, and were left in a 230°C dryer overnight (approximately 10 hours) to cause dissolution of the dried product. The amount of zirconium ions in the solution in which the dried product had dissolved was measured by ICP-AES, and the zirconium content (mass ppm) in the slurry for a functional layer was calculated based on solid content mass.

### <Heat shrinkage resistance>

A slurry for a functional layer was applied onto one side of a separator substrate (made from polyethylene; thickness: 12 µm) and was dried at 50°C for 3 minutes to obtain a separator including a functional layer (thickness: 4 µm) on the separator substrate.

A test specimen was obtained by cutting out the obtained separator including the functional layer as a 12 cm × 12 cm square and then drawing a square having a side length of 10 cm inside the cut-out square. The test specimen was left in a 130°C thermostatic tank for 1 hour, and then the area change of the square drawn inside the test specimen (= {(area of square before being left - area of square after being left)/area of square before being left} × 100%) was determined as the heat shrinkage rate and was evaluated by the following standard. A smaller heat shrinkage rate indicates that the functional layer has higher protective functionality and that the separator including the functional layer has better heat shrinkage resistance.
A: Heat shrinkage rate of less than 1%
B: Heat shrinkage rate of not less than 1% and less than 5%
C: Heat shrinkage rate of not less than 5% and less than 10%
D: Heat shrinkage rate of 10% or more

### <Peel strength>

A slurry for a functional layer was applied onto one side of a separator substrate (made from polyethylene; thickness: 12 µm) and was dried at 50°C for 3 minutes to obtain a separator including a functional layer (thickness: 4 µm) on the separator substrate.

The obtained separator including the functional layer was cut out as a rectangle of 100 mm in length and 10 mm in width to obtain a test specimen. The test specimen was placed with the functional layer surface facing downward, cellophane tape (tape prescribed by JIS Z1522) was affixed to the functional layer surface, and then the stress was measured when the separator substrate was peeled off by pulling one end of the separator substrate in a perpendicular direction at a pulling speed of 10 mm/min. (Note that the cellophane tape was secured to a test stage.) This measurement was performed three times, and an average value was determined as the peel strength and was evaluated by the following standard. A larger peel strength indicates stronger adhesion of the functional layer to the separator substrate.
A: Peel strength of 100 N/m or more
B: Peel strength of not less than 75 N/m and less than 100 N/m
C: Peel strength of not less than 50 N/m and less than 75 N/m
D: Peel strength of less than 50 N/m

### <Rate of Gurley value increase due to functional layer formation>

The Gurley value G0 (sec/100 cc) of a separator substrate on which a functional layer had not been formed was measured using a Gurley meter (SMOOTH & POROSITY METER produced by Kumagai Riki Kogyo Co., Ltd.; measurement diameter: 2.9 cm).

Next, a slurry for a functional layer was applied onto one side of a separator substrate (made from polyethylene; thickness: 12 µm) and was dried at 50°C for 3 minutes to obtain a separator including a functional layer (thickness: 4 µm) on the separator substrate.

The Gurley value G1 of the obtained separator including the functional layer was measured in the same manner as G0. The rate of increase of the Gurley value (%) (= (G1 - G0)/G0 × 100) was calculated and was evaluated by the following standard. A lower rate of Gurley value increase indicates that the separator including the functional layer has better ion permeability and that excellent battery characteristics (particularly rate characteristics) can be ensured more easily.
A: Rate of Gurley value increase of not less than 1% and less than 15%
B: Rate of Gurley value increase of not less than 15% and less than 25%
C: Rate of Gurley value increase of not less than 25% and less than 35%
D: Rate of Gurley value increase of 35% or more

### (Example 1)

### <Preparation of dispersant>

A separable flask made from SUS and including a stirrer, a reflux condenser, and a thermometer was charged with 249 parts of desalinated water in advance and was stirred at 90°C while 286 parts of an aqueous solution of acrylic acid sodium salt (concentration: 35%; solid content: 100 parts) as a carboxy group-containing monomer, 250 parts of an aqueous solution of 3-allyloxy-2-hydroxy-1-propane sulfonic acid sodium salt (concentration: 40%; solid content: 100 parts) as a sulfo group-containing monomer, and 200 parts of an aqueous solution of ammonium persulfate (concentration: 5%) as a polymerization initiator were each separately added dropwise over 3.5 hours. Once this dropwise addition was completed, a boiling point reflux state was maintained for 30 minutes to complete polymerization and yield a water-soluble polymer (sodium salt of polycarboxylic acid-sulfonic acid copolymer). The weight-average molecular weight of the obtained water-soluble polymer was measured. The result is shown in Table 1.

### <Preparation of binder>

A reactor including a stirrer was charged with 70 parts of deionized water, 0.15 parts of sodium lauryl sulfate (EMAL 2F produced by Kao Corporation) as an emulsifier, and 0.5 parts of ammonium persulfate as a polymerization initiator, the gas phase was purged with nitrogen gas, and heating was performed to 60°C.

Meanwhile, a monomer composition was obtained in a separate vessel by mixing 50 parts of deionized water, 0.5 parts of sodium dodecylbenzenesulfonate as an emulsifier, 2 parts of acrylonitrile as a (meth)acrylonitrile monomer, 93.8 parts of butyl acrylate as a (meth)acrylic acid ester monomer, 2 parts of methacrylic acid, 1 part of allyl glycidyl ether, 1.2 parts of N-methylolacrylamide, and 0.15 parts of ethylenediaminetetraacetic acid sodium salt tetrahydrate (CHELEST 400G produced by Chelest Corporation). The monomer composition was continuously added into the reactor over 4 hours to carry out polymerization. The reaction was carried out at 60°C during this addition. After completion of the addition, a further 3 hours of stirring was performed at 70°C and then the reaction was ended to prepare a water dispersion of a particulate binder (acrylic polymer).

### <Pre-addition step>

A composition containing α-alumina particles, a dispersant, and water was obtained by adding 0.5 parts (in terms of solid content of dispersant) of the dispersant described above to deionized water, subsequently adding and mixing 100 parts of α-alumina particles (A-26 produced by Sumitomo Chemical Co., Ltd.) as non-conductive inorganic particles, and then adding water having an electrical conductivity of 10 µS/cm to the resultant mixture.

### <Pulverizing and dispersing step>

The composition obtained in the pre-addition step was subjected to pulverizing and dispersing treatment using a high-pressure spraying disperser (Sun Burst produced by Sugino Machine Limited; treatment capability: 300 L/hr) that performed pulverizing and dispersing by causing pressurized treatment subjects to collide with one another under conditions of a pressure of 245 MPa, a flow rate of 200 L/hr, and a number of passes of 3 to obtain a dispersion liquid.

### <Preparation step>

The dispersion liquid obtained in the pulverizing and dispersing step was mixed with 12.5 parts (0.5 parts in terms of solid content of thickener) of a 4% aqueous solution of carboxymethyl cellulose sodium salt as a thickener, and then 13.3 parts (6 parts in terms of solid content of binder) of the dispersion liquid of the binder (acrylic polymer) and 0.5 parts (in terms of solid content of wetting agent) of an aqueous solution of a non-ionic surfactant as a wetting agent were added to and mixed with the resultant mixture to obtain a preparation.

### <Magnetic substance removal step>

Magnetic substances were removed from the preparation obtained in the preparation step using a magnet filter (produced by TOK ENGINEERING Co., Ltd.) under conditions of room temperature and a magnetic flux density of 10,000 gauss to obtain a slurry for a secondary battery functional layer. The obtained slurry for a secondary battery functional layer was used to measure and evaluate the viscosity, amount of mesh residue, and zirconium content, and also the heat shrinkage resistance, peel strength, and rate of Gurley value increase due to functional layer formation of a separator. The results are shown in Table 1.

### (Example 2)

A dispersant and a binder were prepared, and a pre-addition step, a preparation step,, and a magnetic substance removal step were implemented to obtain a slurry for a secondary battery functional layer in the same way as in Example 1 with the exception that a pulverizing and dispersing step was implemented as described below. Various measurements and evaluations were performed in the same way as in Example 1. The results are shown in Table 1.

### <Pulverizing and dispersing step>

A composition obtained in the pre-addition step was subjected to pulverizing and dispersing treatment using a bead mill (STARMILL LMZ2 produced by Ashizawa Finetech Ltd.) under conditions of a bead diameter of 0.3 mm, a circumferential speed of 13 m/sec, a flow rate of 2 L/min, and a number of passes of 20 to obtain a dispersion liquid.

### (Example 3)

A dispersant and a binder were prepared, and a pre-addition step, a pulverizing and dispersing step, a preparation step, and a magnetic substance removal step were implemented to obtain a slurry for a secondary battery functional layer in the same way as in Example 1 with the exception that the pressure of the high-pressure spraying disperser in the pulverizing and dispersing step was changed to 70 MPa. Various measurements and evaluations were performed in the same way as in Example 1. The results are shown in Table 1.

### (Example 4)

A dispersant and a binder were prepared, and a pre-addition step, a pulverizing and dispersing step, a preparation step, and a magnetic substance removal step were implemented to obtain a slurry for a secondary battery functional layer in the same way as in Example 1 with the exception that in preparation of the dispersant, the amount of the aqueous solution of ammonium persulfate (concentration: 5%) as a polymerization initiator was changed from 200 parts to 400 parts, and thus the weight-average molecular weight of the dispersant was changed as shown in Table 1. Various measurements and evaluations were performed in the same way as in Example 1. The results are shown in Table 1.

### (Example 5)

### <Preparation of dispersant>

A water-soluble polymer (sodium salt of polycarboxylic acid-sulfonic acid copolymer) was prepared in the same way as in Example 1.

### <Preparation of binder>

A water dispersion of a particulate binder (acrylic polymer) was prepared in the same way as in Example 1.

### <Preparation of composition>

A composition containing α-alumina particles and water was obtained by adding and mixing 100 parts of α-alumina particles (A-26 produced by Sumitomo Chemical Co., Ltd.) as non-conductive inorganic particles with deionized water, and then adding water having an electrical conductivity of 10 µS/cm.

### <Pulverizing and dispersing step>

The composition obtained as described above was subjected to pulverizing and dispersing treatment using a high-pressure spraying disperser (Sun Burst produced by Sugino Machine Limited; treatment capability: 300 L/hr) that performed pulverizing and dispersing by causing pressurized treatment subjects to collide with one another under conditions of a pressure of 245 MPa, a flow rate of 200 L/hr, and a number of passes of 3 to obtain a dispersion liquid.

### <Post-addition step>

Addition and stirring of 0.5 parts (in terms of solid content of dispersant) of the dispersant described above were performed with respect to the dispersion liquid obtained in the pulverizing and dispersing step.

### <Preparation step and magnetic substance removal step>

A preparation was obtained in the same way as in Example 1 with the exception that the dispersion liquid to which the dispersant had been added in the post-addition step described above was used. Moreover, magnetic substances were removed from the obtained preparation in the same way as in Example 1 to obtain a slurry for a secondary battery functional layer, and various evaluations were performed. The results are shown in Table 1.

### (Example 6)

### <Preparation of dispersant>

A water-soluble polymer (sodium salt of polycarboxylic acid-sulfonic acid copolymer) was prepared in the same way as in Example 1.

### <Preparation of binder>

A water dispersion of a particulate binder (acrylic polymer) was prepared in the same way as in Example 1.

### <Pre-addition step>

A composition containing α-alumina particles, a dispersant, and water was obtained by adding 0.3 parts (in terms of solid content of dispersant) of the dispersant described above to deionized water, subsequently adding and mixing 100 parts of α-alumina particles (A-26 produced by Sumitomo Chemical Co., Ltd.) as non-conductive inorganic particles, and then adding water having an electrical conductivity of 10 µS/cm to the resultant mixture.

### <Pulverizing and dispersing step>

The composition obtained in the pre-addition step was subjected to pulverizing and dispersing treatment using a high-pressure spraying disperser (Sun Burst produced by Sugino Machine Limited; treatment capability: 300 L/hr) that performed pulverizing and dispersing by causing pressurized treatment subjects to collide with one another under conditions of a pressure of 245 MPa, a flow rate of 200 L/hr, and a number of passes of 3 to obtain a dispersion liquid.

### <Post-addition step>

Addition and stirring of 0.2 parts (in terms of solid content of dispersant) of the dispersant described above were performed with respect to the dispersion liquid obtained in the pulverizing and dispersing step.

### <Preparation step and magnetic substance removal step>

A preparation was obtained in the same way as in Example 1 with the exception that the dispersion liquid to which the dispersant had been added in the post-addition step described above was used. Moreover, magnetic substances were removed from the obtained preparation in the same way as in Example 1 to obtain a slurry for a secondary battery functional layer, and various evaluations were performed. The results are shown in Table 1.

### (Comparative Example 1)

A dispersant and a binder were prepared, and a pre-addition step, a pulverizing and dispersing step, a preparation step, , and a magnetic substance removal step were implemented to obtain a slurry for a secondary battery functional layer in the same way as in Example 3 with the exception that in preparation of the dispersant, the amount of the aqueous solution of ammonium persulfate (concentration: 5%) as a polymerization initiator was changed from 200 parts to 100 parts, and thus the weight-average molecular weight of the dispersant was changed as shown in Table 1. Various measurements and evaluations were performed in the same way as in Example 1. The results are shown in Table 1.

In Table 1, shown below:
"Inorganic particles" indicates non-conductive inorganic particles;
"α-Al" indicates α-alumina particles;
"Copolymer Na salt" indicates sodium salt of polycarboxylic acid-sulfonic acid copolymer;
"CMC-Na" indicates carboxymethyl cellulose sodium salt;
"ACL" indicates acrylic polymer;
"Non-ionic" indicates non-ionic surfactant;
"High-pressure spraying" indicates high-pressure spraying disperser; and
"Particle diameter" indicates volume-average particle diameter.

**Table 1**

| | | | | Example 1 | Example 2 | Example 3 | Example 4 | Example 5 | Example 6 | Comparative Example 1 |
|---|---|---|---|---|---|---|---|---|---|---|
| Materials | Inorganic particles | | | α-Al | α-Al | α-Al | α-Al | α-Al | α-Al | α-Al |
| | Dispersant | Type | | Copolymer Na salt | Copolymer Na salt | Copolymer Na salt | Copolymer Na salt | Copolymer Na salt | Copolymer Na salt | Copolymer Na salt |
| | | Weight-average molecular weight [-] | | 6000 | 6000 | 6000 | 3000 | 6000 | 6000 | 16000 |
| | Other materials | Thickener | | CMC-Na | CMC-Na | CMC-Na | CMC-Na | CMC-Na | CMC-Na | CMC-Na |
| | | Binder | | ACL | ACL | ACL | ACL | ACL | ACL | ACL |
| | | Wetting agent (surfactant) | | Non-ionic | Non-ionic | Non-ionic | Non-ionic | Non-ionic | Non-ionic | Non-ionic |
| Production steps | Used amount of inorganic particles [parts by mass] | | | 100 | 100 | 100 | 100 | 100 | 100 | 100 |
| | Pre-addition step | Yes/No | | Yes | Yes | Yes | Yes | No | Yes | Yes |
| | | Additive amount of dispersant [parts by mass] | | 0.5 | 0.5 | 0.5 | 0.5 | - | 0.3 | 0.5 |
| | Pulverizing and dispersing step | Used device | | High-pressure spraying | Bead mill | High-pressure spraying | High-pressure spraying | High-pressure spraying | High-pressure spraying | High-pressure spraying |
| | | High-pressure spraying pressure [MPa] | | 245 | - | 70 | 245 | 245 | 245 | 70 |
| | | Particle diameter of α-Al [µm] | Before pulverizing and dispersing | 50 | 50 | 50 | 50 | 50 | 50 | 50 |
| | | | After pulverizing and dispersing | 0.7 | 0.6 | 1.7 | 0.7 | 0.7 | 0.7 | 1.7 |
| | | Specific surface area of α-Al [m²/g] | Before pulverizing and dispersing | 1.5 | 1.5 | 1.5 | 1.5 | 1.5 | 1.5 | 1.5 |
| | Post-addition step | Yes/No | | No | No | No | No | Yes | Yes | No |
| | | Additive amount of dispersant [parts by mass] | | - | - | - | - | 0.5 | 0.2 | - |
| | Preparation step | | | Addition of thickener and binder | Addition of thickener and binder | Addition of thickener and binder | Addition of thickener and binder | Addition of thickener and binder | Addition of thickener and binder | Addition of thickener and binder |
| | Magnetic substance removal step | | | Yes | Yes | Yes | Yes | Yes | Yes | Yes |
| Physical properties of slurry | Viscosity [mPa·s] | | | 25 | 35 | 25 | 20 | 25 | 25 | 40 |
| | Solid content concentration [mass%] | | | 40 | 40 | 40 | 40 | 40 | 40 | 40 |
| | Amount of mesh residue [-] | | | A | A | c | A | A | A | D |
| | Zirconium content [mass ppm] | | | ≤ 10 | 100 | ≤ 10 | ≤ 10 | ≤ 10 | ≤ 10 | ≤ 10 |
| Physical properties of separator | Peel strength [-] | | | A | A | C | A | A | A | A |
| | Heat shrinkage resistance [-] | | | A | A | C | B | A | A | C |
| | Rate of increase of Gurley value [-] | | | A | A | A | A | A | A | A |

It can be seen from Table 1 that in Examples 1 to 6 in which a slurry for a functional layer was prepared through a step of performing pulverizing and dispersing treatment of a composition containing non-conductive inorganic particles and water and a step of adding a dispersant including a sulfo group and having a weight-average molecular weight within a range of 1,000 to 15,000 before, after, or both before and after the pulverizing and dispersing treatment, a slurry for a functional layer having excellent dispersibility was obtained compared to in Comparative Example 1 in which a dispersant having a weight-average molecular weight of more than 15,000 was used. Moreover, the production efficiency of a slurry for a functional layer could be increased in Examples 1 to 6 by removing the burden of drying α-alumina particles in water by spray drying before redispersing the α-alumina particles in water.

### INDUSTRIAL APPLICABILITY

Through the presently disclosed method of producing a slurry for a secondary battery functional layer, it is possible to efficiently produce a slurry for a secondary battery functional layer having non-conductive inorganic particles well dispersed in water.

## Claims

1. A method of producing a slurry for a secondary battery functional layer comprising a step of performing pulverizing and dispersing treatment of a composition containing non-conductive inorganic particles and water to obtain a dispersion liquid, and further comprising either or both:
a step of mixing the non-conductive inorganic particles and the water with a dispersant that includes a sulfo group and has a weight-average molecular weight of not less than 1,000 and not more than 15,000, before the step of performing pulverizing and dispersing treatment, to prepare the composition; and
a step of adding a dispersant that includes a sulfo group and has a weight-average molecular weight of not less than 1,000 and not more than 15,000 to the dispersion liquid after the step of performing pulverizing and dispersing treatment.

2. The method of producing a slurry for a secondary battery functional layer according to claim 1, wherein the non-conductive inorganic particles have a volume-average particle diameter of not less than 10 µm and not more than 120 µm in the composition before the pulverizing and dispersing treatment, and the non-conductive inorganic particles have a volume-average particle diameter of not less than 0.3 µm and not more than 1.5 µm in the dispersion liquid after the pulverizing and dispersing treatment.

3. The method of producing a slurry for a secondary battery functional layer according to claim 1 or 2, comprising both:
a step of mixing the non-conductive inorganic particles and the water with a dispersant that includes a sulfo group and has a weight-average molecular weight of not less than 1,000 and not more than 15,000, before the step of performing pulverizing and dispersing treatment, to prepare the composition; and
a step of adding a dispersant that includes a sulfo group and has a weight-average molecular weight of not less than 1,000 and not more than 15,000 to the dispersion liquid after the step of performing pulverizing and dispersing treatment.

4. The method of producing a slurry for a secondary battery functional layer according to any one of claims 1 to 3, wherein the pulverizing and dispersing treatment is performed using a high-pressure spraying disperser.

5. The method of producing a slurry for a secondary battery functional layer according to any one of claims 1 to 4, wherein the non-conductive inorganic particles include at least one selected from the group consisting of alumina particles, boehmite particles, and titanium oxide particles.

6. The method of producing a slurry for a secondary battery functional layer according to any one of claims 1 to 5, wherein the slurry for a secondary battery functional layer has a viscosity of not less than 1 mPa·s and not more than 30 mPa·s.
